(19) **Europäisches Patentamt**

**European Patent Office**

**Office européen des brevets**

(11) **EP 1 493 790 A1**

(12) **EUROPEAN PATENT APPLICATION**

(43) Date of publication:
**05.01.2005 Bulletin 2005/01**

(51) Int Cl.⁷: **C09J 7/02**, C09J 153/02

(21) Application number: **03077043.2**

(22) Date of filing: **30.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **KRATON Polymers Research B.V.**
**1031 CM Amsterdam (NL)**

(72) Inventors:
• **Dupont, Martine Jeanne**
  **1348 Ottignies - Louvain-La-Neuve (BE)**

• **Mayenez, Catherine**
  **1348 Ottignies - Louvain-La-Neuve (BE)**

(74) Representative: **Kortekaas, Marcel C. J. A.**
**KRATON Polymers Research B.V.,Intellectual Property Services,**
**P.O. Box 37666**
**1030 BH Amsterdam (NL)**

(54) **Label stock with improved die-cutting performance**

(57) The present invention concerns label stock comprising a laminate of face stock, a pressure sensitive adhesive layer and a release liner, wherein the pressure sensitive adhesive layer comprises

(a) at least one block copolymer, comprising at least two terminal blocks of poly(vinyl aromatic compound) and at least one midblock of a randomly copolymerized mixture of isoprene (I) and butadiene (B) used in a weight ratio of (I):(B) of 20:80 to 80:20, said midblock having a single glass transition temperature Tg of at most -50°C determined according to ASTM E-1356-98),
(b) at least one diblock copolymer, comprising one block of poly(vinyl aromatic compound) and one block of polymerized butadiene and/or isoprene;
(c) a tackifying resin; and
(d) optionally a plasticizer

wherein component (a) is a thermoplastic elastomer, component (b) comprises from 25 to 85% by weight of the mixture of components (a) and (b), and wherein on 100 parts by weight of the mixture of components (a) and (b), from 20 to 450 parts by weight component (c) is used.

**Description**

Field of the Invention

The present invention concerns a label stock with improved die-cutting performance. More in particular, the present invention concerns labels comprising a laminate of face stock, pressure sensitive layer and release liner, wherein the pressure sensitive layer is an adhesive comprising a tackified styrenic block copolymer.

Background of the Invention

Pressure sensitive adhesive ("PSA") labels are highly desirable for a wide variety of purposes. For instance, pages of peelable label stock are available which can be fit into standard printers to print address labels, etc. The preaddressed labels are then peeled off and put on envelopes. There are a wide variety of uses for such labels and many varieties, sizes, and types are available commercially. Alternatively labels may also be used in the packaging industry ("permanent labels").

One method for producing sheets, etc. of PSA labels involves providing a base sheet (or roll) which is generally coated with a release coating. Release coatings are materials from which the label can be peeled away such that the adhesive is not removed from the label and retaining its adhesive properties. Thus, the label then has the capability of being adhered to another substrate.

A separate sheet of label material, so-called face stock, which can be printed or written upon, is formed and a label adhesive is coated on the side of the sheet opposite to the side upon which it is intended to be printed or written upon. The label sheet is then adhered to the release coating sheet by placing the adhesive surface in contact with the release coating surface. For paper labels, the adhesive is usually coated on the release material and this construction is then laminated with the paper. This is called "transfer coating". The printing step happens afterwards. For filmic labels, the adhesive might be coated on the filmic substrate first (depending on the nature of the substrate).

During the label manufacture, a laminate of face stock (either paper or film, either colored or transparent), PSA layer and release liner is passed through an apparatus that converts the laminate to yield commercially useful labels and label stock. The process involved in the converting operation includes printing, die cutting and matrix stripping to leave labels on a release liner. The cost of converting a laminate into a finished product is a function of the speed at which the various processing operations occur. While the nature of all layers of the laminate can impact cost of convertibility, the adhesive layer is an important limiting factor in ease and cost of convertibility. This is in consequence of its viscoelastic nature, which hampers precise and clean penetration of a die in die-cutting operations and promotes adherence to cutting blades. Stringiness of the adhesive also impacts matrix-stripping operations, which follow die-cutting operations.

Emulsion acrylic adhesives convert very well and this makes them very successful in the label industry. However they exhibit poorer adhesive performance compared to styrenic block copolymers-based adhesives, in particular SIS based adhesives (for example: water sensitivity, lower aggressive tack or lower adhesion on polyolefins), wherein SIS stands for poly(styrene-isoprene-styrene) block copolymer. Moreover, acrylic polymer emulsions require handling large volumes of liquid and subsequent liquid removal. They also perform poorer at low temperatures.

Styrenic block copolymers, of the formula A-B-A (wherein A stands for polystyrene blocks and B stands for elastomeric blocks typically composed of (co)polymerized conjugated dienes) and variations thereof, are used in a variety of PSA applications because of their formulation flexibility, their excellent adhesive properties on a wide range of substrates and their hot-melt processability. They are particularly suitable for tape applications due to their excellent cohesion. However, in label applications the styrenic block copolymers have not yet established a major market position.

The inherently good elastic behavior of a high performance SIS block copolymer turns out to be an obstacle for its use in labels because it reduces the die-cuttability of the finished label. Thus, when converting the laminate into labels by the process mentioned above, there is label entrainment in the waste matrix, tension is put on the waste matrix which is then distorted, causing problems down line the die cutting step.

It has been found before that this limitation of styrenic block copolymers can be overcome by using grades that comprise a high diblock content, e.g., of general formula A-B. For instance, in the leaflets "Communications from KPRL", issues 7-2000 and 8-2000, released by KRATON Polymers in 2000, the test results of various SIS grades with different diblock content have been presented.

Although PSAs based on KRATON® D-1163NS or KRATON® D-1113 (SIS with diblock content of 40%, respectively 55%) have been found perfectly suited for label applications, further improvement in respect of die-cutting behavior remains desirable. It is an object of the present invention to provide label stock with improved die cutting behavior, as well as the labels produced there from and the adhesive layer used in its preparation.

Summary of the Invention

Accordingly, the present invention relates to label stock comprising a laminate of face stock, a PSA layer and a release liner, wherein the PSA layer comprises

(a) at least one block copolymer, comprising at least two terminal blocks of poly(vinyl aromatic compound) and at least one midblock of a randomly copolymerized mixture of isoprene (I) and butadiene (B) used in a weight ratio of (I):(B) of 20:80 to 80:20, said midblock having a single glass transition temperature Tg of at most -50°C determined according to ASTM E-1356-98),

(b) at least one diblock copolymer, comprising one block of poly(vinyl aromatic compound) and one block of polymerized butadiene and/or isoprene;
(c) a tackifying resin; and
(d) optionally a plasticizer

wherein component (a) is a thermoplastic elastomer, component (b) comprises from 30 to 85% by weight of the mixture of components (a) and (b), and wherein on 100 parts by weight of the mixture of components (a) and (b), from 20 to 450 parts by weight component (c) is used.

Brief Description of the Figure

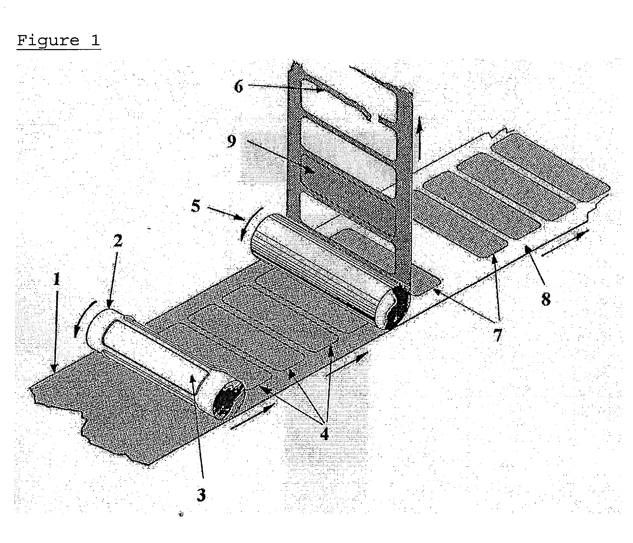

The basic method for producing labels from roll label stock by label die cutting is shown in Figure 1. The roll label stock 1 is fed through a rotary die 2 which has several cutters 3 which produce the desired shape of the cut out 4 in the roll label stock 1. The roll label stock 1 then continues on to the stripping roller 5 which removes the matrix flagging 6 from the roll stock 1, leaving behind the die cut labels 7.
With respect to this process it will be understood that it is important that the rotary die 2 be able to cut through the adhesive and the top layer of roll label stock 1. The adhesive must be strong enough, however, to leave the label behind on the release liner 8 of roll label stock 1.
It should also be realized that the die-cutting behavior is influenced by the blade angle of rotary die 2 and the speed of the process. The narrower the angle, the sharper but also the more expensive and fragile the blades. For this reason, it is preferred to use as large an angle as is possible. Ideally high speeds, even at high blade cutting angles (e.g., more than 50 m/min at a blade cutting angle of 110°) should be achieved.

Detailed description of the Invention

Component (a)

The main block copolymer component used in the adhesive composition is a block copolymer, having a structure represented by the general formulae

$$S- (I/B) -S \qquad (1) \text{ or } \qquad (S- (I/B)]_n X \qquad (2)$$

optionally mixed with minor amounts of one or more block copolymers selected from the group S-B-S, S-I-S, and radial variations thereof wherein S represents a poly(vinyl aromatic compound) block, (I/B) represents a block of a randomly copolymerized mixture of isoprene and butadiene, wherein the weight ratio between isoprene and butadiene is in the range of from 80:20 to 20:80, wherein n is an integer equal to or greater than 2, and wherein X is the residue of a coupling agent. Such block copolymers are known to behave as thermoplastic elastomers, given the proper choice of molecular weight, and total content of vinyl aromatic compound.
As an example of the aromatic vinyl compound useful in the practice of the present invention, may be mentioned styrene, alpha-methylstyrene, p-methylstyrene, o-methylstyrene, p-tert.butylstyrene, dimethylstyrene, and vinyl naphthalene or mixtures thereof. Of these, styrene is particularly preferred from the viewpoints of easy availability, reactivity, physical properties of the resulting block copolymers. The A polymer block may contain minor amounts of comonomers other than an aromatic vinyl compound, e.g., up to 5 wt% of a copolymerizable monomer such as butadiene and/or isoprene (based on the weight of the total block). Most preferred are A blocks derived from substantially pure styrene. These polymer blocks A preferably have a true molecular weight in the range from 9,500 to 25,000.
The mixed polymer midblock (I/B) is made of butadiene and isoprene as copolymerizing monomers, although it too may contain minor amounts of other comonomers, e.g. up to 5 wt% of a copolymerizable monomer such as styrene (based on the weight of the total block), but mixtures of substantially pure isoprene and butadiene are preferred.

In the block copolymers according to the present invention, the proportion of bound aromatic vinyl compound is in the range of 10-50 wt%, preferably 12-45 wt% based on the total block copolymer, most preferably 15-30 wt%. The proportion of bound butadiene is 18-80 wt%, preferably 40-70 wt% in total. The proportion of bound isoprene is 15-70 wt%, preferably 30-70 wt%. These amounts of bound monomers (plus copolymerizable monomers, if any) add up to 100 wt%.

The or each block copolymer (a) to be applied in the adhesive compositions according to the present invention preferably has a weight average molecular weight (Mw, expressed in terms of polystyrene) ranging from 100,000 to 500,000, preferably from 150,000 to 250,000 as determined by gel permeation chromatography (GPC, using the method described by J. R. Runyon et al, J. Polym. Sci., 13, 2359 (1969).

The block copolymers to be applied in the adhesive compositions according to the present invention each preferably contain 1,2-vinyl bonds and/or 3,4-vinyl bonds in a proportion in the range of from 5 to 40 wt% based on the weight of the conjugated diene, and preferably from 5 to 20 wt% based on the weight of conjugated diene.

The block copolymers according to the present invention each have only one peak on loss tangent (tan δ) attributable to the mixed butadiene/isoprene polymer block at a temperature of -50 °C or below.

Said block copolymers to be applied as main component (a) in the adhesive composition, have a randomly copolymerized block (I/B), which means that the mixed midblock shows no significant single homopolymer block formation. They can be prepared as described in WO 02/057386.

The block copolymers according to the present invention can be made e.g. by coupling living diblock copolymer prepared by anionic polymerization with a coupling agent.

As examples of the coupling agent, may be mentioned tin coupling agents such as tin dichloride, monomethyltin dichloride, dimethyltin dichloride, monoethyltin dichloride, diethyltin dichloride, methyltin trichloride, monobutyltin dichloride, dibutyltin dibromide, monohexyltin dichloride and tin tetrachloride; halogenated silicon coupling agents such as dichlorosilane, monomethyldichlorosilane, dimethyldichlorosilane, monoethyldichlorosilane, diethyldichlorosilane, monobutyldichlorosilane, dibutyldichlorosilane, monohexyldichlorosilane, dihexyldichlorosilane, dibromosilane, monomethyldibromosilane, dimethyldibromosilane, silicon tetrachloride and silicon tetrabromide; alkoxysilanes such as tetramethoxysilane; divinyl aromatic compounds such as divinylbenzene and divinylnaphthalene; halogenated alkanes such as dichloroethane, dibromoethane, methylene chloride, dibromomethane, dichloropropane, dibromopropane, chloroform, trichloroethane, trichloropropane and tribromopropane; halogenated aromatic compounds such as dibromobenzene; epoxy compounds such as the diglycidyl ether of bisphenol-A and the like (e.g., "EPON" 825 diglycidyl ether, trademark) and other coupling agents such as benzoic esters, CO, 2-chloropropene and 1-chloro-1,3-butadiene. Of these, "EPON" 825 diglycidyl ether, dibromobenzene, tetramethoxysilane or other tetra(alkoxy)silanes are preferred.

The block copolymers may also be prepared by a a full sequential polymerization process (resulting in a product of general formula (1), with re-introduction of initiator before or during the step 2 polymerization (preparation of the I/B block), resulting in the in-situ formation of a diblock copolymer.

## Component (b)

Component (b) may be the finished, uncoupled diblock copolymer left as a component in component (a) which is synthesized by coupling a living diblock copolymer. In this preferred embodiment, the polymer blocks of both components will be identical. It may also be the in-situ produced diblock copolymer as the result of re-introduction of the initiator. Alternatively, a different diblock copolymer may be used, including poly(styrene-butadiene) and poly(styrene-isoprene) diblock copolymers. Component (b) may comprise a mixture of diblock copolymers.

Component (b) comprises from 25 to 80% by weight of the mixture of components (a) and (b).

## Components (c) and (d)

Tackifying resins and plasticizers, as well as other components like antioxidants and the like, for use in PSA compositions based on styrenic block copolymers are known. Such PSAs are, for instance, described in Chapter 13 of the Handbook of Pressure Sensitive Adhesive Technology, 2nd ed. by Donatas Satas (ISBN 0-442-28026-2). On pages 326-328 various rubber phase associated resins are disclosed, e.g., aliphatic olefin-derived resins, rosin esters, polyterpenes and terpene phenolic resins derived from petroleum or terpentine sources, which provide tack to the styrenic block copolymer. In Table 13-10 of this handbook label formulations based on 100 parts of KRATON® D-1112X and D-1117X are described, having good die cuttability, further comprising 140 parts of hydrocarbon tackifying resin, such as WINGTACK™ 95 (Goodyear) or ESCOREZ™ 1310 (Exxon), 40 parts of plasticizer such as SHELLFLEX™ 371 (Shell) and 2 parts of phenolic antioxidant, such as IRGANOX™ 1010 or IRGANOX™ 565 (Ciba-Geigy) or antioxidant 330 (Ethyl Corp.) A long list of suitable tackifying resins may be found in European patent application EP0802251A, herewith incorporated by reference. Particularly suitable tackifying resins are those having an average aromaticity (in relative percentage of aromatic protons as determined by proton-NMR) in the range of from 3 to 18%.

A preferred type of resins are the mixed aliphatic/aromatic resins, mentioned in WO 02/057386, herewith incorporated by reference. An example of a suitable tackifying resin is WINGTACK™ 86, a modified aliphatic hydrocarbon resin with a softening point of 86°C, and an aromaticity of 9.6.

The fourth component of the adhesive formulation of the present invention is oil. It preferably is present in an amount from 10 to 60 parts by weight per 100 parts of the mixture of components (a) and (b). Rubber compounding oils are well known in the art and include both high saturates content oils and naphthenic oils. Preferred plasticizer oils are highly saturated oils, e.g., TUFFLO® 6056 and 6204 oil made by Arco and naphthenic process oils, e.g., SHELLFLEX® 371 and 6371 oil made by Shell Chemical Company. The preferred amount of oil is 20 to 50 parts by weight so as to obtain the appropriate glass transition temperature and tack (label formulations typically contain about 40 phr of oil).

These adhesive formulations can be made by the typical hot melt mixing process, e.g. using a sigma blade mixer. The compositions of the present invention may be modified further with the addition of other antioxidants and stabilizers without departing from the scope of this invention.

The process of preparing a laminate of a face stock, PSA layer and a release liner is also known. Thus, the PSA layer may be applied without using any solvent (e.g., hot-melt) or in the form of its solution to a base material such as paper or a plastic film by means of a proper coater.


EXAMPLES

A number of different block copolymers and tackifying resins were used in combination with oil as plasticizer and oxidant to make adhesive formulations for testing herein. The materials which were used in these experiments are listed in Table 1. PICCOTAC® 1094-E resin is an aliphatic hydrocarbon resin and WINGTACK® 96 resin has been defined herein before. The resins were used in an amount of 150 parts by weight on 100 parts by weight of the mixture of components (a) and (b). EDELEX™ N956, a naphthenic mineral oil, was used as plasticizer, in an amount of 40 parts by weight. Finally, the formulation comprised 3 parts by weight of IRGANOX™ 1010 as antioxidant.

The tensile, adhesive, and process properties of these formulations were measured.

- 180° peel adhesion (PA) was determined by Pressure Sensitive Tape Council Method No. 1. Large numbers indicate high strength when peeling a test tape from a steel substrate.
- Loop tack (LT) was determined using a (TLMI) loop tack tester. High numbers for PPT and LT indicate aggressive tack.
- Rolling Ball Tack (RBT) is the distance a steel ball rolls on the adhesive film with a standard initial velocity (Pressure Sensitive Tape Council Test No. 6). Small numbers indicate aggressive tack.
- Holding Power (HP) is the time required to pull a standard area (2.54 cm x 2.54 cm) of tape from a standard test surface (steel, Kraft paper) under a standard load (500g), in shear at 2° antipeel (FTM (Finat Test Method) 8). Long times indicate high adhesive strength. The test was here conducted at 70°C.

The results are recorded in Tables 2 and 3. As shown in Table 2, both adhesives provide labels having acceptable properties. As shown in Table 3, the label stock based on polymer composition A has the best die-cutting behavior.

Table 1

| Polymer | Type | Styrene Content (%) | Diblock content (%) |
|---|---|---|---|
| KRATON® D-1113 | S-I-S + S-I | 16 | 55 |
| Polymer composition A | S-I/B-S + S-I/B | 16 | 55 |

Table 2

| Formulation base on ... | KD1113 | Polymer comp. A |
|---|---|---|
|  |  |  |
| Mixing T, °C | 160 | 160 |
|  |  |  |
| PA, N/25 mm | paper tear | paper tear |

Table 2 (continued)

| Formulation base on ... | KD1113 | Polymer comp. A |
|---|---|---|
| LT, N/ 25mm | 27 | 24 |
| RBT, cm | 8 | 6 |
| HP @ 70°C, 500g, h | 2.3 | 1.4 |

Polymer composition A has a slightly better RBT performance, and a slightly worse LT and HP performance. On balance, these two compositions perform equally well.

Table 3

| Formulation based on ... | KD1113 | Polymer comp. A |
|---|---|---|
| Die cutting behaviour, depending on blade angle | | |
| 60° | < 50 m/min | >77 m/min |
| 75° | < 10 m/min | >77 m/min |
| 110° | < 6 m/min | >77 m/min |

The die cutting behavior of Polymer composition A (77 is the limit of the equipment) greatly outperforms that of the composition based on KD1113, which illustrates the superior properties of Polymer composition A.

**Claims**

1. A label stock comprising a laminate of face stock, a pressure sensitive adhesive layer and a release liner, wherein the pressure sensitive adhesive layer comprises

   (a) at least one block copolymer, comprising at least two terminal blocks of poly(vinyl aromatic compound) and at least one midblock of a randomly copolymerized mixture of isoprene (I) and butadiene (B) used in a weight ratio of (I):(B) of 20:80 to 80:20, said midblock having a single glass transition temperature Tg of at most -50°C determined according to ASTM E-1356-98),
   (b) at least one diblock copolymer, comprising one block of poly(vinyl aromatic compound) and one block of polymerized butadiene and/or isoprene;
   (c) a tackifying resin; and
   (d) optionally a plasticizer

   wherein component (a) is a thermoplastic elastomer, component (b) comprises from 25 to 85% by weight of the mixture of components (a) and (b), and wherein on 100 parts by weight of the mixture of components (a) and (b), from 20 to 450 parts by weight component (c) is used.

Figure 1

**European Patent Office**

**EUROPEAN SEARCH REPORT**

Application Number

EP 03 07 7043

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02 057386 A (DE KEYZER NOEL RAYMOND MAURICE ;KRATON POLYMERS RES B V (NL); VAN) 25 July 2002 (2002-07-25)<br>* claims 1,10 *<br>* page 8, line 28 - line 31 *<br>* page 11, line 10 - line 19 *<br>--- | 1 | C09J7/02<br>C09J153/02 |
| A | DE 29 42 128 A (BASF AG)<br>30 April 1981 (1981-04-30)<br>* claim 1 *<br>* page 12, line 6 - line 12 *<br>--- | 1 | |
| A | WO 02 00805 A (GEORJON OLIVIER J ;LECHAT JACQUES B (BE); GIBERT FRANCOIS X (FR);)<br>3 January 2002 (2002-01-03)<br>* claims *<br>* page 6, line 24 - page 7, line 9 *<br>--- | 1 | |
| A | WO 97 30844 A (HAEGER ROBERT ;ATO FINDLEY INC (US); HAMANN RICHARD (US); VITRANO)<br>28 August 1997 (1997-08-28)<br>* claims 1,10 *<br>* page 2, line 33 - page 3, line 7 *<br>----- | 1 | TECHNICAL FIELDS SEARCHED (Int.Cl.7)<br>C09J |

The present search report has been drawn up for all claims

| Place of search | Date of completion of the search | Examiner |
|---|---|---|
| THE HAGUE | 25 November 2003 | Schlicke, B |

EPO FORM 1503 03.82 (P04C01)

## ANNEX TO THE EUROPEAN SEARCH REPORT
## ON EUROPEAN PATENT APPLICATION NO.

EP 03 07 7043

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2003

| Patent document cited in search report | | Publication date | Patent family member(s) | | Publication date |
|---|---|---|---|---|---|
| WO 02057386 | A | 25-07-2002 | WO | 02057386 A2 | 25-07-2002 |
| | | | EP | 1354016 A2 | 22-10-2003 |
| DE 2942128 | A | 30-04-1981 | DE | 2942128 A1 | 30-04-1981 |
| WO 0200805 | A | 03-01-2002 | AU | 7157701 A | 08-01-2002 |
| | | | EP | 1299495 A2 | 09-04-2003 |
| | | | WO | 0200805 A2 | 03-01-2002 |
| WO 9730844 | A | 28-08-1997 | AU | 709222 B2 | 26-08-1999 |
| | | | AU | 1962697 A | 10-09-1997 |
| | | | BR | 9707862 A | 27-07-1999 |
| | | | CA | 2247060 A1 | 28-08-1997 |
| | | | CN | 1216953 A | 19-05-1999 |
| | | | EP | 0885119 A1 | 23-12-1998 |
| | | | JP | 2001504519 T | 03-04-2001 |
| | | | WO | 9730844 A1 | 28-08-1997 |

EPO FORM P0459

For more details about this annex : see Official Journal of the European Patent Office, No. 12/82